# EUROPÄISCHE PATENTSCHRIFT

(11) **EP 3 070 551 B1**
(45) Veröffentlichungstag und Bekanntmachung des Hinweises auf die Patenterteilung: **25.04.2018**
(21) Anmeldenummer: 15159428.0
(22) Anmeldetag: 17.03.2015
(51) Int. Cl.: G05B 19/042, G06F 13/362, G06F 13/40

(54) **DATENBUSKOPPLER UND VERFAHREN ZUM BETRIEB**
DATA BUS COUPLER AND METHOD FOR OPERATING
COUPLEUR DE BUS DE DONNÉES ET SON PROCÉDÉ DE FONCTIONNEMENT

(43) Veröffentlichungstag der Anmeldung: 21.09.2016
(73) Patentinhaber: Siemens Aktiengesellschaft, 80333 München (DE)
(72) Erfinder: Pohle, Michael, 09125 Chemnitz (DE)

(56) Entgegenhaltungen:
- EP-A1- 2 765 465
- DE-A1- 10 206 657

## Beschreibung

Die Erfindung betrifft einen Datenbuskoppler mit einem Primär-Busanschluss für einen Primär-Bus und einer Mehrzahl von Sekundär-Busanschlüssen für den Anschluss je eines Endgerätes, umfassend eine Slave-Einheit, welche mit dem Primär-Busanschluss in Verbindung steht, und einer Master-Einheit, welche an die Sekundär-Busanschlüsse anschaltbar ist, und welche ausgestaltet ist an die Sekundär-Busanschlüsse Telegramme abzusetzen.

Im Sinne der Erfindung können der Primär-Bus und die Verbindungen der Sekundär-Busanschlüsse zu den Endgeräten als Feldbusse angesehen werden. Insbesondere bei einem Einsatz von Feldbussen, beispielsweise in der Automatisierungstechnik, wie ein Profibus-PA oder ein Foundation Fieldbus H1 (Kurzform: FF H1) kann es vorkommen, dass wenn zwei oder mehr Endgeräte mit einer gleichen Busadresse sich an dem Datenbuskoppler befinden, eine Anlagenstörung auftritt, die nur aufwändig gefunden werden kann. Auch ist ein Austausch oder das Hinzufügen von Endgeräten aufwändig, da für eine Adressvergabe des Teilnehmers zusätzliche Bedienschritte und der Einsatz eines Programmiergerätes notwendig sind.

Die Offenlegungsschrift EP 2 407 840 A1 offenbart ein Verfahren zum Betrieb einer Automatisierungseinrichtung, wobei die Automatisierungseinrichtung mindestens eine Master-Einheit und mindestens eine über einen ersten Bus verbundene Slave-Einheit/DP-FF-Link umfasst, wobei während der Steuerung eines technischen Prozesses über den ersten Bus Telegramme übermittelt werden, welche einen Prozessabbild-Datenbereich für projektierte, an die Slaveeinheit über einen zweiten Bus/FF-Busangeschlossenen Feldgeräte und einen projektierten reservierten Prozessabbild-Datenbereich umfassen.

Die EP 2 765 465 A1 offenbart ein Verfahren zum Betrieb eines Feldbuskommunikationsmoduls, um auch bei modular aufgebauten Endgeräten eine komfortablere Adressierung zu erreichen, wird vorgeschlagen ein Abbildungsmittel in dem Feldbuskommunikationsmodul zu betreiben.

In der DE 102 06 657 A1 wird ein Aktuator-Sensor-Interface vorgestellt. Um einen schnelleren Datentransfer zu erreichen, wird vorgeschlagen die einzelnen Aktuator-Sensor-Interface an einem Bus untereinander kommunizieren zu lassen.

Von Nachteil ist es bei den bekannten Verfahren, dass eine manuelle Busadresseinstellung der Feldgeräte außerhalb der Anlage erfolgen muss und dann die Feldgeräte in die Anlage eingebaut werden. Daraus ergibt sich folgender Ablauf: Die Feldgeräte müssen angeschlossen und manuell Inbetrieb genommen werden und zwar der Reihe nach. Zur Inbetriebnahme gehört eine Busadressvergabe, beispielsweise mit einem tragbaren Programmiergerät, wobei Feldgerät für Feldgerät nacheinander parametriert werden muss.

Aufgabe der vorliegenden Erfindung ist es, eine schnelle, einfache und konfliktfreie Inbetriebnahme von Feldgeräten bzw. Endgeräten wie Profibus PA bzw. Foundation Fieldbus-Hl Feldgeräten an einen Datenbuskoppler zu erreichen.

Bei dem eingangs genannten Datenbuskoppler mit einem Primär-Busanschluss für einen Primär-Bus und einer Mehrzahl von Sekundär-Busanschlüssen für den Anschluss je eines Endgerätes, wobei der Datenbuskoppler eine Slave-Einheit, welche mit dem Primär-Busanschluss in Verbindung steht und eine Master-Einheit, welche an die Sekundär-Busanschlüsse anschaltbar ist und welche ausgestaltet ist, an die Sekundär-Busanschlüsse Telegramme abzusetzen, wird die Aufgabe dadurch gelöst, dass der Datenbuskoppler zusätzlich eine Steuereinheit und ein Kommunikations-Schaltmittel pro Sekundär-Busanschluss aufweist, wobei die Kommunikations-Schaltmittel ausgestaltet sind, den jeweiligen Sekundär-Busanschluss mit der Master-Einheit zu verbinden oder von der Master-Einheit zu trennen, die Steuereinheit ist dabei weiterhin ausgestaltet, die Kommunikations-Schaltmittel bezüglich des Verbindens oder des Trennens zu steuern, dazu weist die Steuereinheit einen Befehlsausgang auf und ist ausgestaltet über den Befehlsausgang der Master-Einheit eine geplante Anfrage der Steuereinheit an einen bestimmbaren Sekundär-Busanschluss mitzuteilen, wobei die Steuereinheit weiterhin einen Telegrammauswerte-Eingang aufweist, welcher mit der Master-Einheit verbunden ist und die Steuereinheit ausgestaltet ist, die von der Master-Einheit abgesetzten Telegramme mitzulesen und die Telegramme auf die geplante Anfrage hin zu untersuchen, weiterhin ist die Steuereinheit ausgestaltet, zu dem Zeitpunkt des Absendens der Anfrage durch die Master-Einheit die Kommunikationsschaltmittel zu steuern. Durch die Steuereinheit, welche nun im Stande ist die Kommunikations-Schaltmittel der zugehörigen Sekundär-Busanschlüsse zu steuern, ist es nun möglich, gezielt einen bestimmten Sekundär-Busanschluss, beispielsweise für eine Adressanfrage, an die Master-Einheit anzuschalten, wobei zeitgleich um Störungen der anderen Teilnehmer zu vermeiden, die restlichen Sekundär-Busanschlüsse von der Master-Einheit durch die jeweils zugehörigen Kommunikations-Schaltmittel abgeschaltet werden. Das Merkmal zu dem Zeitpunkt des Absendens, ist nicht zu streng zu sehen, es kann auch kurz vorher oder während oder kurz nach dem Absenden steuernd eingegriffen werden.

Dazu ist in Bezug auf definierte Adressprüfungen oder Adressanfragen von einzelnen an die Sekundär-Busanschlüsse angeschlossenen Endgeräten die Steuereinheit weiterhin ausgestaltet, dass die zum angefragten Sekundär-Busanschluss zugehörigen Kommunikations-Schaltmittel, derart gesteuert werden, dass es den in der Anfrage bestimmten zugehörigen Sekundär-Busanschluss an die Master-Einheit anschaltet und die übrigen Kommunikations-Schaltmittel derart steuert, dass die Master-Einheit von den
in der Anfrage nicht bestimmten Sekundär-Busanschlüssen getrennt wird.

Weiterhin ist es von Vorteil, dass der Datenbuskoppler pro Sekundär-Busanschluss ein Versorgungsschaltmittel aufweist, wobei die Steuereinheit weiterhin ausgestaltet ist, die Versorgungsschaltmittel derart zu steuern, dass eine Versorgungsspannung an die Sekundär-Busanschlüsse einzeln anschaltbar ist.

Weiterhin ist es von Vorteil, wenn der Datenbuskoppler eine Diagnoseeinheit aufweist, welche mit der Steuereinheit in Verbindung steht und ausgestaltet ist ein Anschließen eines Endgerätes an einen Sekundär-Busanschluss zu erkennen, wobei die Steuereinheit dazu ausgestaltet ist, vor einem möglichen Erkennen alle Versorgungs-Schaltmittel so zu steuern, dass die Versorgungsspannung an die Sekundär-Busanschlüsse angeschaltet ist.

Wird beispielsweise bei einer Konfigurationsänderung während des Betriebes (CiR, Configuration Change in Run) ein Teilnehmer von dem Datenbuskoppler getrennt, so wird diese Trennung durch die Diagnoseeinheit registriert. Daraufhin informiert die Diagnoseeinheit die Steuereinheit, welche daraufhin das zugehörige Kommunikations-Schaltmittel des Sekundär-Busanschlusses von welchem das Endgerät getrennt wurde, von der Master-Einheit wegschaltet um zusätzliche Störungen zu vermeiden.

Im Gegensatz zum Trennen eines Endgerätes wird, wenn ein Endgerät an einen Sekundär-Bus angeschlossen wird, die Diagnoseeinheit dies aufgrund von einem zusätzlichen Energieverbrauch registrieren, wobei die Diagnoseeinheit wiederum über den zusätzlich angeschalteten Teilnehmer die Steuereinheit informiert. Das zusätzlich angeschaltete Endgerät ist nun zwar mit einer Versorgungsspannung versorgt, aber die Kommunikations-Schaltmittel des zusätzlich angeschalteten Endgerätes haben aufgrund der Steuerung durch die Steuereinheit das zusätzlich angeschaltete Endgerät noch nicht mit der Master-Einheit verbunden um Kommunikationsstörungen zu vermeiden. Dieses zusätzlich hinzugefügte Endgerät würde bei einem nächsten Überprüfungslauf durch den Datenbuskoppler, wobei sequentiell alle Kommunikations-Schaltmittel derart gesteuert werden, dass jeweils ein Teilnehmer auf seine gültige Adresse hin überprüft wird, auch überprüft werden und gegebenenfalls würde ihm eine passende Adresse vergeben werden, wodurch er anschließend in den normalen Kommunikationsbetrieb mit aufgenommen werden kann. Demnach ermöglicht der Datenbuskoppler ein Endgerätewechsel oder das Hinzufügen von Endgeräten, da ausgetauschte oder hinzugefügte Endgeräte einfach nur angeschlossen werden müssen und von dem Datenbuskoppler quasi in einem Scan-Lauf automatisch erkannt werden und dabei konfliktfrei ihre Busadresse erhalten.

Dazu ist es auch vorteilhaft, wenn die Diagnose-Einheit weiterhin dazu ausgestaltet ist, ein Trennen eines Endgerätes von einem Sekundär-Busanschluss zu erkennen, wobei die Steuereinheit dazu ausgestaltet ist, quasi zeitgleich, die zugehörigen Kommunikations-Schaltmittel derart zu steuern, dass die Master-Einheit von den zugehörigen Sekundär-Busanschlüssen getrennt ist. Ein Trennen erkennt die Diagnoseeinheit beispielsweise aufgrund einer Drahtbruchprüfung.

Die eingangs genannte Aufgabe hinsichtlich der schnellen, einfachen und konfliktfreien Inbetriebnahme von z.B. Profibus PA bzw. Foundation Fieldbus-Hl Feldgeräten an einen Datenbuskoppler wird ebenfalls durch ein Verfahren zum Ermitteln von Adressen von Endgeräten gelöst. Das Verfahren setzt an wenn Endgeräte über einen Sekundär-Busanschluss an einen Datenbuskoppler nach einem der Ansprüche 1 bis 5 angeschlossen werden, wobei ausgehend von einem an einen Sekundär-Busanschluss angeschlossenen Endgerät in der Steuereinheit eine Anfrage für dieses Endgerät generiert wird, diese Anfrage wird an die Master-Einheit übermittelt und in einer Warteschlange eingereiht, zeitgleich wird von der Steuereinheit der von der Master-Einheit ausgesendete Telegrammverkehr überwacht und die abgesetzten Telegramme werden auf das Erscheinen der Anfrage überprüft, wobei die Anfrage auf einen bestimmten Sekundär-Busanschluss gerichtet wird und weiterhin die Anfrage eine erste vermutete Adresse des an den bestimmten Sekundär-Busanschluss angeschlossenen Endgerätes enthält, ergibt die Überwachung, dass die Anfrage von der Master-Einheit ausgesendet wird, so steuert die Steuereinheit die Kommunikations-Schaltmittel derart, dass der bestimmte Sekundär-Busanschluss an die Master-Einheit angeschaltet wird oder bleibt und die übrigen Sekundär-Busanschlüsse von der Master-Einheit getrennt werden. Auch hier ist das Anschalten bzw. Trennen der Sekundär-Busanschlüsse von der Master-Einheit als sehr vorteilhaft anzusehen, weil durch das Abschalten der z.Zt. nicht angesprochenen Sekundärbus-Anschlüsse der restliche Telegramm-Verkehr bzw. die sonstigen Endgeräte nicht gestört werden, da nun eine Adressanfrage an einen ganz bestimmten Teilnehmer gerichtet wird. Das Einreihen der Anfrage in die Warteschlange ermöglicht es, dass diese Adressanfragen während eines normalen Betriebes des Datenbuskopplers erfolgen können. Der normale Telegramm-Verkehr läuft noch während der von der Steuereinheit abgesetzten Anfrage weiter, da aber nun die Anfrage in die Warteschlange eingereiht ist und die Steuereinheit registriert, dass nach Abarbeiten von den normalen Kommunikations-Telegrammen nun die Anfrage an der Reihe ist, wird speziell für den Zeitpunkt, ab dem von der Master-Einheit die Anfrage ausgesendet wird, die Kommunikations-Schaltmittel derart gesteuert, dass die Anfrage nur an den einen anzufragenden Teilnehmer gelangen kann. Da dieser Verfahrensschritt derart ausgeführt wird, können Adressanfragen während des laufenden Betriebes des Datenbuskopplers konfliktfrei erfolgen.

Da die Adressanfragen automatisiert in dem Datenbuskoppler abgehandelt werden sollen, ist es von Vorteil, wenn in einen ersten Anfrageversuch die Anfrage auf einen ersten Sekundär-Busanschluss bzw. auf das an ihn angeschlossene erste Endgerät gerichtet wird und die Anfrage eine Adresse enthält mit dem Wert entsprechend einer Wertigkeit, welche der Sekundär-Busanschluss bzw. welche das Endgerät durch seine Position an den Datenbuskoppler hat, wobei auf eine von dem ersten Endgerät ausgesendete Antwort gewartet wird und für den Fall, dass innerhalb einer vorgegebenen Zeitspanne keine Antwort von der Master-Einheit empfangen wird, wird ein zweiter Anfrageversuch mit einer Adresse mit dem Wert entsprechend eines Default-Wertes durchgeführt, und für den Fall, dass innerhalb der vorgegebenen Zeitspanne eine Antwort von der Master-Einheit empfangen wird, wird die in der letzten Anfrage enthaltenen Adresse als gültig für diesen Sekundär-Busanschluss bzw. den darin angeschlossenen Teilnehmer übernommen. Diese Vorgehensweise bietet sich insbesondere bei einer Erst-Inbetriebnahme eines Feldbussystems mit einem Datenbuskoppler mit mehreren Feldbussträngen und mehreren Endgeräten an.

Demnach wird eine Adressanfrage an ein Endgerät mit einer vermuteten Adresse gesendet. Im günstigsten Fall hat das erste Endgerät die Adresse 1, das zweite Endgerät die Adresse 2, das dritte Endgerät die Adresse 3 usw.. Es kann aber auch sein, dass das Endgerät eine Default-Adresse, beispielsweise 126, aufweist. Da dies, insbesondere bei einer Erstinbetriebnahme, häufig der Fall ist, wird in dem zweiten Anfrageversuch die Anfrage mit der vermuteten Default-Adresse des Default-Wertes ausgeführt. Sollte aber auch die Anfrage mit der Default-Adresse nicht zu einem Erfolg führen, so werden sukzessive der ganze Adressbereich von Null bis 125 durchgeprüft.

In einem weiteren Schritt des Verfahrens wird für den Fall, dass die Anfrage ergeben hat, dass der Teilnehmer nicht die Adresse entsprechend der Wertigkeit der Position des Sekundär-Busanschlusses aber eine nun aus der sukzessiven Prüfung heraus gewonnenen Adresse hat, so wird diese mit einem Adresszuweisungsbefehl nach der Art des Absetzens der Anfrage zugewiesen.

Für den Fall, dass keine Adressanfrage positiv quittiert werden konnte, wird eine Diagnose generiert, welche prüft ob überhaupt ein Gerät angeschlossen ist oder ob es defekt ist oder ob es nicht für den Bus geeignet ist.

In den zuvor genannten Verfahrensschritten werden die Zugriffe von beispielsweise über den Primär-Bus angeschlossenen weiteren Busteilnehmern an die übrigen Sekundär-Busanschlüsse während der Zeit der Anfragen, vorzugsweise von der Master-Einheit unterdrückt.

Eine mögliche Ausgestaltungsvariante des Absetzens der Anfrage könnte wie folgt aussehen: Die Steuereinheit sendet vorzugsweise ein Diagnosekommando (GetDiag), welches die vermutete Adresse als Ansprechpartner für die Diagnose enthält. Wenn der an den bestimmten Sekundär-Busanschluss angeschlossene Teilnehmer nicht in einer vorgegebenen Zeit auf das Diagnosekommando reagiert, so wird die vermutete Adresse bei einer nächsten Anfrage auf den Default-Wert, beispielsweise 126 gesetzt, sollte auch diese Anfrage nicht positiv quittiert werden, so wird für die jetzt erneut folgenden Anfrage die vermutete Adresse von beispielsweise 0 bis 125 bei jeder Anfrage um 1 erhöht, solange bis bei einer Adresse auf das Diagnosekommando positiv geantwortet wird.

Bei allen gezielten Anfragen an einen einzelnen Teilnehmer ist es von Vorteil, wenn nach der Übertragung der Anfrage der Master-Einheit und nach Ablauf einer Wartezeit mittels der Steuereinheit die Kommunikations-Schaltmittel derart gesteuert werden, dass die übrigen Sekundär-Busanschlüsse wieder an die Master-Einheit angeschaltet werden, um den normalen Kommunikationsbetrieb wieder zu gewährleisten.

Um den automatisierten Prozess in dem Datenbuskoppler für das Ermitteln von Adressen von Endgeräten komplett durchzuführen, wird für den Fall, dass innerhalb der vorgegebenen Zeitspanne eine Antwort von der Master-Einheit empfangen wird, mittels der Steuereinheit eine Anfrage für einen weiteren Sekundär-Busanschluss bzw. für ein weiteres daran angeschlossenes Endgerät generiert, um alle möglicherweise angeschalteten Endgeräte auf ihre Adressen hin zu überprüfen.

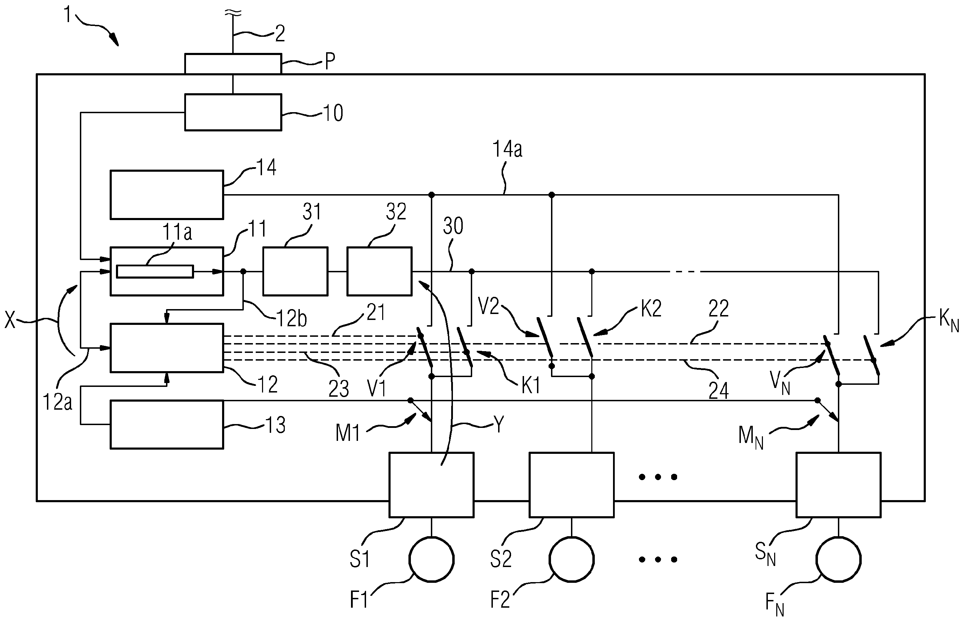

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigt die Figur einen Datenbuskoppler.

Gemäß der Figur ist ein Datenbuskoppler 1 mit einem Primär-Busanschluss P für den Anschluss an einen Primär-Bus 2 und einer Mehrzahl von Sekundär-Busanschlüssen S1,S2,..,S_{N} für den Anschluss je eines Endgerätes F1,F2,...,F_{N} dargestellt.

Der Datenbuskoppler 1 kann beispielsweise in der Automatisierungstechnik als Datenbuskoppler 1 zwischen einem überlagerten Profibus DP-Bus und einem unterlagerten Profibus PA-Bus eingesetzt werden.

Für die Kommunikation zwischen dem überlagerten Bus und dem unterlagerten Bus weist der Datenbuskoppler 1 eine Slave-Einheit 10 auf, welche mit dem Primär-Busanschluss P in Verbindung steht, und eine Master-Einheit 11, welche an die Sekundär-Busanschlüsse S1,S2,..,S_{N} anschaltbar ist und welche ausgestaltet ist, an die Sekundär-Busanschlüsse S1,S2,..,S_{N} Telegramme abzusetzen.

Die Slave-Einheit 10 ist über eine Datenleitung mit der Master-Einheit 11 verbunden und kann dadurch Telegramme des Primär-Busses 2 an die Master-Einheit 11 weitergeben. Die Master-Einheit 11 ist wiederum mit einem Segmentkoppler 31 verbunden, wobei der Segmentkoppler 31 wiederum mit einem Konverter 32 verbunden ist. Nach dem Konverter 32 folgt eine interne Busleitung 30 des Datenbuskopplers 1. An diese interne Busleitung 30 werden über Kommunikations-Schaltmittel K1,K2,..,K_{N} entsprechende Sekundär-Busanschlüsse S1,S2,..,S_{N} angeschaltet. Demnach ist der erste Sekundär-Busanschluss S1 über ein erstes Kommunikations-Schaltmittel K1 mit der internen Busleitung 30 verbindbar, der zweite Sekundär-Busanschluss S2 ist über ein zweites Kommunikations-Schaltmittel K2 mit der internen Busleitung 30 verbindbar und ein nter-Busanschluss der Busanschluss S_{N} ist über ein n-tes Kommunikations-Schaltmittel K_{N} mit der internen Busleitung 30 verbindbar.

An die Sekundär-Busanschlüsse S1,S2,..,S_{N} ist jeweils über einen Feldbusstrang ein Endgerät F1,F2,..,F_{N} angeschlossen.

Um die Kommunikations-Schaltmittel K1,K2,..,K_{N} entsprechend zu steuern, weist der Datenbuskoppler 1 eine Steuereinheit 12 auf. Die Steuereinheit 12 steuert die Kommunikations-Schaltmittel K1,K2,..,K_{N} derart, dass der jeweilige Sekundär-Busanschluss S1,S2,..,S_{N} mit der Master-Einheit 11 verbunden wird oder von der Master-Einheit 11 getrennt wird.

Um das Steuern der Kommunikations-Schaltmittel K1,K2,..,K_{N} bezüglich des Verbindens oder des Trennens zu steuern, weist die Steuereinheit 12 weiterhin einen Befehlsausgang 12a auf und ist ausgestaltet, über den Befehlsausgang 12a der Master-Einheit 11 eine geplante Anfrage X der Steuereinheit 12 an einen bestimmbaren Sekundär-Busanschluss S1,S2,..,S_{N} mitzuteilen, wobei die Steuereinheit 12 weiterhin einen Telegrammauswerte-Eingang 12b aufweist. Dieser Telegrammauswerte-Eingang 12b ist mit der Master-Einheit 11 verbunden und die Steuereinheit 12 ist ausgestaltet die von der Master-Einheit 11 abgesetzten Telegramme mitzulesen und die Telegramme auf die geplante Anfrage X hin zu untersuchen, wobei weiterhin die Steuereinheit 12 ausgestaltet ist, zu dem Zeitpunkt des Absendens der Anfrage X durch die Master-Einheit 11 die Kommunikations-Schaltmittel K1,K2,..,K_{N} entsprechend zu steuern.

Da mit der Erfindung erreicht werden soll, dass ein Anwender sich generell nicht mehr um eine Busadressvergabe bei der Inbetriebnahme von beispielsweise Profibus-PA bzw. Foundation Feldbus-Hl Feldbussegmenten kümmern muss, soll eine Busadress-Vergabe bzw. eine Prüfung von Busadressen bzw. ein Erkennen von neu hinzugeschalteten Geräten völlig automatisch und dabei konfliktfrei durch den Datenbuskoppler 1 erfolgen. Damit dieses nicht nur bei einer Erstinbetriebnahme sondern auch im laufenden Betrieb erfolgen kann, ist die Steuereinheit 12 dazu ausgestaltet, die zum angefragten Sekundär-Busanschluss S1,S2,..,S_{N} zugehörigen Kommunikations-Schaltmittel K1,K2,..,K_{N} derart zu steuern, dass es den in der Anfrage X bestimmten zugehörigen Sekundär-Busanschluss S1,S2,..,S_{N} an die Master-Einheit 11 anschaltet und die übrigen Kommunikations-Schaltmittel K1,K2,..,K_{N} derart steuert, dass die Master-Einheit 11 von den in der Anfrage X nicht bestimmten Sekundär-Busanschlüssen S1,S2,..,S_{N} getrennt wird.

Für das An- und Abschalten einer Versorgungsspannung zu den Endgeräten F1,F2,..,F_{N} weist der Datenbuskoppler 1 intern eine Versorgungsleitung 14a auf. Über Versorgungs-Schaltmittel V1,V2,..,V_{N} jeweils eins pro Sekundär-Busanschluss S1,S2,..,S_{N} kann eine Versorgungsspannung an die Sekundär-Busanschlüsse S1,S2,..,S_{N} einzeln angeschaltet werden. Die Steuereinheit 12 ist dabei weiterhin dazu ausgestaltet, die Versorgungs-Schaltmittel V1,V2,..,V_{N} dementsprechend zu steuern.

Mit der Steuerung der Vorsorgungs-Schaltmittel V1,V2,..,V_{N} wird vor einer Anfrage an einen bestimmten Sekundär- Busanschluss S1,S2,..,S_{N} zunächst die jeweilige Versorgungsspannung an den anzufragenden Sekundär-Busanschluss S1,S2,..,S_{N} um ein möglicherweise mit dem Sekundär-Busanschluss S1,S2,..,S_{N} verbundenes Endgerät F1,F2,..,F_{N} mit einer Versorgungsspannung zu versorgen.

Die Steuereinheit 12 weist zum Steuern der Versorgungs-Schaltmittel V1,V2,..,V_{N} und zum Steuern der Kommunikations-Schaltmittel K1,K2,..,K_{N} eine erste Steuerleitung 21, eine zweite Steuerleitung 22, eine dritte Steuerleitung 23 und eine vierte Steuerleitung 24 auf, wobei aus Gründen der Übersichtlichkeit hier nur die erste Steuerleitung 21 zum Steuern des ersten Versorgungs-Schaltmittels V1, die zweite Steuerleitung 22 zum Steuern des n-ten Versorgungs-Schaltmittels V_{N} dargestellt ist. Ebenso sind die dritte Steuerleitung 23 und die vierte Steuerleitung 24 zum Steuern des ersten Kommunikations-Schaltmittels K1 bzw. zum Steuern des n-ten Kommunikations-Schaltmittels K_{N} dargestellt.

Für eine Diagnose weist der Datenbuskoppler 1 eine Diagnoseeinheit 13 auf, welche mit der Steuereinheit 12 in Verbindung steht und ausgestaltet ist, ein Anschließen eines Endgerätes F1,F2,..,F_{N} an einen Sekundär-Busanschluss S1,S2,..,S_{N} zu erkennen, wobei die Steuereinheit 12 weiterhin dazu ausgestaltet ist vor einem möglichen Erkennen alle Versorgungs-Schaltmittel V1,V2,..,V_{N} so zu steuern, dass die Versorgungsspannung an die Sekundär-Busanschlüsse S1,S2,..,S_{N} angeschaltet ist. Weiterhin ist die Diagnoseeinheit 13 dazu ausgestaltet, ein Trennen eines Endgerätes F1,F2,..,F_{N} von einem Sekundär-Busanschluss S1,S2,..,S_{N} zu erkennen, wobei die Steuereinheit 12 dazu ausgestaltet ist, quasi zeitgleich die zugehörigen Kommunikations-Schaltmittel K1,K2,..,K_{N} derart zu steuern, dass die Master-Einheit 11 von den zugehörigen Sekundär-Busanschlüssen S1,S2,..,S_{N} getrennt ist.

Für die Realisierung der Diagnose weisen die Sekundär-Busanschlüsse S1,S2,..,S_{N} Messpunkte M1,M2,..,M_{N} auf.

Verfahrensgemäß wird der Datenbuskoppler 1 wie folgt betrieben, ausgehend von einem an einen Sekundär-Busanschluss S1,S2,..,S_{N} angeschlossenen Endgerät F1 wird in der Steuereinheit 12 eine Anfrage X für dieses Endgerät generiert, diese Anfrage X wird an die Master-Einheit 11 übermittelt und in eine Warteschlange 11a eingereiht, zeitgleich wird von der Steuereinheit 12 der von der Master-Einheit 11 ausgesendete Telegrammverkehr überwacht und die abgesetzten Telegramme werden auf das Erscheinen der Anfrage X überprüft, wobei die Anfrage X auf einen bestimmten Sekundär-Busanschluss S1 gerichtet wird und weiterhin enthält die Anfrage X eine erste vermutete Adresse des an den Sekundär-Busanschluss S1 angeschlossenen Endgerätes F1. Ergibt die Überwachung, dass als nächstes auf die interne Busleitung 30 die Anfrage X von der Master-Einheit 11 an den Sekundär-Busanschluss S1 bzw. das daran angeschlossene erste Endgerät F1 ausgesendet wird, so steuert die Steuereinheit 12 das erste Kommunikations-Schaltmittel K1 derart, dass der erste Sekundär-Busanschluss S1 an die Master-Einheit 11 angeschaltet wird und die übrigen Sekundär-Busanschlüsse S2,..,S_{N} von der Master-Einheit 11 getrennt werden.

Eine bevorzugte Steuerung der Kommunikationsschaltmittel sieht vor, das alle Kommunikations-Schaltmittel K1,..,K_{N} an die Mastereinheit 11 angeschaltet sind und wenn während einer Übertragung eines Telegramms erkannt wird, dass es die Anfrage X ist, werden die Kommunikations-Schaltmittel K2,..,K_{N} von der Mastereinheit getrennt und das Kommunikations-Schaltmittel K1 bleibt angeschaltet.

Beispielsweise wird erst nach der Übertragung von den ersten 2-Byte eines Telegramms erkannt, dass es sich um die Anfrage X handelt, und würden daraufhin die Kommunikations-Schaltmittel K1,..,K_{N} abgeschaltet. Jetzt wurden aber bereits 2-Byte an die Endgeräte F2,..,F_{N} übermittelt und mitten in der Übertragung reist die Verbindung ab. Die Endgeräte F2,..,F_{N} erhalten somit nicht das ganze Telegramm bzw. die Anfrage X und verwerfen das teilweise empfangene Telegramm als ungültig. Damit ist sichergestellt, dass die nicht betroffenen Endgeräte F2,..,F_{N} das Telegramm bzw. die Anfrage X nicht erhalten.

Es wird in einem ersten Anfrageversuch die Anfrage X zunächst auf den ersten Sekundär-Busanschluss S1 bzw. auf das an ihn angeschlossene erste Endgerät F1 gerichtet. Dabei enthält die Anfrage X eine Adresse mit dem Wert entsprechend einer Wertigkeit, welche der Sekundär-Busanschluss S1 bzw. das erste Endgerät F1 durch seine Position an den Datenbuskoppler 1 hat, demnach ist die erste Adresse mit der Wertigkeit 1 belegt. Nun wird auf eine Antwort Y von dem ersten Endgerät F1 gewartet und für den Fall, dass innerhalb einer vorgegebenen Zeitspanne keine Antwort Y von dem ersten Endgerät F1 von der Master-Einheit 11 empfangen wird, wird ein zweiter Anfrageversuch mit einer Adresse dem Wert entsprechend eines Default-Wertes (126) durchgeführt.

Nach der Anfrage mit dem Defaultwert 126 erfolgen weitere Anfrageversuche bis der gesamte Wertebereich von möglichen Adressen, welche abhängig vom Einsatz vom PROFIBUS-PA oder FF ist, erforscht wurde.

Für den Fall, dass innerhalb der vorgegebenen Zeitspanne eine Antwort Y des ersten Endgerätes F1 von der Master-Einheit 11 empfangen wurde, wird die in der letzten Anfrage X enthaltene Adresse als gültig für diesen Sekundär-Busanschluss S1 bzw. für den daran angeschlossenen ersten Teilnehmer F1 übernommen.

Für den Fall, dass für alle bisher durchgeführten Anfragen X keine Antwort Y erhalten werden konnte, wird eine Fehlermeldung ausgegeben.

Der Datenbuskoppler 1 ist ausgestaltet, um die folgenden Funktionen auszuführen:

### 1. Dauerbetrieb:

Die Master-Einheit 11 versucht in ihren regulären Kommunikationsbetrieb alle Endgeräte, welche projektiert wurden, zu erreichen, auch wenn diese gerade nicht zu erreichen sind.

### 2. Konfigurationsänderungen während des Betriebes (CiR):

Funktionen des sicheren Anschaltens.

In diesem Verfahrensschritt ist es wichtig, dass alle Zugriffe für beispielsweise über den Primär-Bus angeschlossenen weiteren Busteilnehmern an die übrigen Sekundär-Busanschlüsse S2,..,S_{N}, vorzugsweise von der Master-Einheit 11 unterdrückt werden. Die Steuereinheit 12 steuert alle Versorgungs-Schaltmittel V1,V2,..,V_{N} in den Zustand Anschalten der Versorgungsspannung und alle Kommunikations-Schaltmittel K1,K2,..,K_{N} in den Zustand trennen. Wird nun ein Endgerät F1,F2,..,F_{N} an den Datenbuskoppler 1 angeschaltet, so wird dies durch die Diagnoseeinheit 13 detektiert, weil beispielsweise ein Stromverbrauch gemessen werden kann. Über das Anschalten des Endgerätes wird die Steuereinheit 12 durch die Diagnoseeinheit 13 informiert. Während dieser Zeit können andere Endgeräte mit möglichen Kommunikationsanfragen oder Telegrammen hinsichtlich Adressparameter oder Einstellungen sich nicht störend bemerkbar machen, denn ihre Kommunikationsschaltmittel K1,K2,..,K_{N} sind immer noch geöffnet.

### 3. Konfigurationsänderungen im laufenden Betrieb (CiR):

Funktionssicheres Trennen von Endgeräten.

Wird ein Endgerät F1 von einem Sekundär-Busanschluss S1 getrennt, wird auch dies durch die Diagnoseeinheit 13 detektiert, beispielsweise durch eine Drahtbruchprüfung. Diese Detektion wird der Steuereinheit 12 mitgeteilt. Aufgrund dieser Mitteilung wird die Steuereinheit 12 sofort die entsprechenden Kommunikations-Schaltmittel K1 derart ansteuern, dass die interne Busleitung 30 nicht mehr mit dem Sekundär-Busanschluss S1 verbunden ist. Auch bei dieser Funktion gilt wieder die Zugriffe von angeschlossenen weiteren Busteilnehmern an die übrigen Sekundär-Busanschlüsse S1,..,S_{N} werden unterdrückt.

### 4. Konfigurationsänderungen während des Betriebes (CiR):

Adressermittlung eines Endgerätes.

Die Steuereinheit 12 steuert die Kommunikations-Schaltmittel derart, dass nur die Kommunikations-Schaltmittel des zu prüfenden Sekundär-Busanschlusses geschlossen sind. Die Steuereinheit 12 setzt einen GetDiag-Befehl in der folgenden Reihenfolge ab.
a) Adresse gemäß eines vermuteten Einbauortes,
b) Default-Wert,
c) alle übrigen Adressen 0 .. 125.

Die Steuereinheit 12 untersucht alle Telegramme, welche durch die Master-Einheit 11 gesendet werden, wenn ein Telegramm nicht der Anfrage X (GetDiag-Befehl) entspricht, ist das entsprechende Kommunikations-Schaltmittel noch geöffnet, aber wenn das Telegramm mit der Anfrage X (GetDiag-Befehl), welche erwartet wird, entspricht, werden alle anderen Kommunikations-Schaltmittel außer das Kommunikations-Schaltmittel für das anzusprechende Endgerät geöffnet. Ist der GetDiag-Befehl mit seinem Telegramm zu Ende so werden alle Kommunikations-Schaltmittel wieder zurückgesetzt. Wenn eine Antwort auf den GetDiag-Befehl kommt, so ist die zugewiesene Adresse des Endgerätes bekannt und der Verfahrensschritt kann gestoppt werden oder er kann sogar fortgesetzt werden um aufzuspüren, ob an diesem Sekundär-Busanschluss mehr als ein Endgerät angeschlossen ist.

### 5. Konfigurationen im Betrieb (CiR):

Adresszuweisung eines Endgerätes.

Wenn die zuvor detektierte Adresse des Endgerätes, beispielsweise der Wertigkeit der Position an den Datenbuskoppler entspricht, so sind keine weiteren Verfahrensschritte notwendig, dass zugehörige Kommunikations-Schaltmittel bleibt geschlossen. Andererseits wird die Steuereinheit 12 einen Adresssetzbefehl (Set Slave Adress) zu dem entsprechenden Endgerät absetzen, durch welchen die Adresse des Endgerätes geändert wird.

### 6. Normalbetrieb:

Alle angeschlossenen Endgeräte befinden sich in einem Datenaustauschmodus. Die Versorgungsschaltmittel sind alle geschlossen. Die Kommunikations-Schaltmittel für die Sekundär-Busanschlüsse, bei welchen ein Endgerät angeschlossen ist, sind geschlossen, die restlichen Kommunikations-Schaltmittel sind geöffnet. Dabei ist die Steuereinheit 12 nur noch in einem Überwachungsmodus und reagiert, insbesondere nur noch auf die Diagnoseeinheit 13. Die Steuereinheit 12 beeinflusst jetzt nicht mehr die Mastereinheit 11.

Es ergeben sich für einen Inbetriebsetzer einer Automatisierungsanlage folgende Vorteile: Der Inbetriebsetzer braucht sich generell nicht mehr um eine Busadressvergabe bei der Inbetriebnahme von Profibus-PA bzw. Foundation Fieldbus-Hl Feldbussegmenten zu kümmern. Die Busadressvergabe wird durch den Datenbuskoppler völlig automatisch und dabei konfliktfrei durchgeführt.

Bei einem Endgerätewechsel oder bei einem Hinzufügen von Endgeräten brauchen diese Endgeräte nur hinzugefügt oder einfach nur angeschlossen werden, sie werden dann automatisch vom Datenbuskoppler erkannt und erhalten konfliktfrei eine neue Busadresse.

Als Vorteil erhält man eine Zeitersparnis bei der Inbetriebsetzung und eine Reduktion von möglichen Fehlerquellen bei der Inbetriebnahme von Profibus-PA und Foundation Fieldbus-Hl Feldbussegmenten.

## Patentansprüche

1. Datenbuskoppler (1) mit einem Primär-Busanschluss (P) für einen Primär-Bus (2) und einer Mehrzahl von Sekundär-Busanschlüssen (S1,S2,..,S_{N}) für den Anschluss je eines Endgerätes (F1,F2,..,F_{N}), umfassend
- eine Slave-Einheit (10), welche mit dem Primär-Busanschluss (P) in Verbindung steht, und
- eine Master-Einheit (11), welche an die Sekundär-Busanschlüsse (S1,S2,..,S_{N}) an schaltbar ist und welche ausgestaltet ist an die Sekundär-Busanschlüsse (S1,S2,..,S_{N}) Telegramme abzusetzen oder von ihnen zu empfangen,
**gekennzeichnet durch**
- eine Steuereinheit (12),
- ein Kommunikations-Schaltmittel (K1,K2,..,K_{N}) pro Sekundär-Busanschluss (S1,S2,..,S_{N}), welches den jeweiligen Sekundär-Busanschluss (S1,S2,..,S_{N}) mit der Master-Einheit (11) verbindet oder von der Master-Einheit (11) trennt,
wobei die Steuereinheit (12) ausgestaltet ist die Kommunikations-Schaltmittel (K1,K2,..,K_{N}) bezüglich des Verbindens oder des Trennens zu steuern,
wobei die Steuereinheit (12)
- einen Befehlsausgang (12a) aufweist und ausgestaltet ist über den Befehlsausgang (12a) der Master-Einheit (11) eine geplante Anfrage (X) der Steuereinheit (12) an einen bestimmbaren Sekundär-Busanschluss (S1,S2,..,S_{N}) mit zu teilen, wobei die Steuereinheit (12) weiterhin
- einen Telegrammauswerte-Eingang (12b) aufweist, welcher mit der Master-Einheit (11) verbunden ist, und die Steuereinheit (12) ausgestaltet ist die von der Master-Einheit (11) abgesetzten Telegramme mitzulesen und die Telegramme auf die geplante Anfrage (X) hin zu untersuchen, weiterhin ist die Steuereinheit (12) ausgestaltet zu dem Zeitpunkt des Absendens der Anfrage (X) durch die Master-Einheit (11) die Kommunikations-Schaltmittel (K1,K2,..,KN) zu steuern, dabei ist die Steuereinheit (12) dazu ausgestaltet die zum angefragten Sekundär-Busanschluss (S1,S2,..,S_{N}) zugehörigen Kommunikations-Schaltmittel (K1,K2,...,K_{N}), derart gesteuert werden, dass es den in der Anfrage (X) bestimmten zugehörigen Sekundär-Busanschluss (S1,S2,..,S_{N}) an die Master-Einheit (11) anschaltet und die übrigen Kommunikations-Schaltmittel (K1,K2,..,K_{N}) derart steuert, dass die Master-Einheit (11) von den in der Anfrage (X) nicht bestimmten Sekundär-Busanschlüssen (S1,S2,..,S_{N}) getrennt wird.

2. Datenbuskoppler (1) nach Anspruch 1, mit einem Versorgungs-Schaltmittel (V1,V2,..,V_{N}) pro Sekundär-Busanschluss (S1,S2,..,S_{N}), wobei die Steuereinheit (12) weiterhin ausgestaltet ist die Versorgungs-Schaltmittel (V1,V2,..,V_{N}) derart anzusteuern, dass eine Versorgungsspannung an die Sekundär-Busanschlüsse (S1,S2,..,S_{N}) einzeln schaltbar ist.

3. Datenbuskoppler (1) nach Anspruch 2, mit einer Diagnose-Einheit (13), welche mit der Steuereinheit (12) in Verbindung steht und ausgestaltet ist ein Anschließen eines Endgerätes (F1,F2,..,F_{N}) an einen Sekundär-Busanschluss (S1,S2,..,S_{N}) zu erkennen, wobei die Steuereinheit (12) dazu ausgestaltet ist vor einem möglichen Erkennen alle Versorgungs-Schaltmittel (V1,V2,..,V_{N}) so zu steuern, dass die Versorgungsspannung an die Sekundär-Busanschlüsse (S1,S2,..,S_{N}) angeschaltet ist.

4. Datenbuskoppler (1) nach Anspruch 3, wobei die Diagnose-Einheit (13) weiterhin dazu ausgestaltet ist ein Trennen eines Endgerätes (F1,F2,...,F_{N}) von einem Sekundär-Busanschluss (S1,S2,..,S_{N}) zu erkennen, wobei die Steuereinheit (12) dazu ausgestaltet ist quasi zeitgleich die zugehörigen Kommunikations-Schaltmittel (K1,K2,..,K_{N}) derart zu steuern, dass die Master-Einheit (11) von den zugehörigen Sekundär-Busanschlüssen (S1,S2,..,S_{N}) getrennt ist.

5. Verfahren zum Ermitteln von Adressen von Endgeräten (F1,F2,..,F_{N}), welche über Sekundär-Busanschlüsse (S1,S2,..,S_{N}) an einen Datenbuskoppler (1) nach einem der Ansprüche 1 bis 4 angeschlossen werden, wobei ausgehend von einem an einen Sekundärbus-Anschluss (S1) angeschlossenen Endgerät (F1) in der Steuereinheit (12) eine Anfrage (X) für dieses Endgerät (F1) generiert wird, diese Anfrage (X) wird an die Master-Einheit (11) übermittelt und in eine Warteschlange (11a) eingereiht, zeitgleich wird von der Steuereinheit (12) der von der Master-Einheit (11) ausgesendete Telegrammverkehr überwacht und die abgesetzten Telegramme werden auf das Erscheinen der Anfrage (X) überprüft, wobei die Anfrage (X) auf einen bestimmten Sekundär-Busanschluss (S1,S2,..,SN) gerichtet wird und weiterhin die Anfrage (X) eine erste vermutete Adresse des an den bestimmten Sekundär-Busanschluss (S1,S2,..,SN) angeschlossenen Endgerätes (F1) enthält, ergibt die Überwachung, dass die Anfrage (X) von der Master-Einheit (11) ausgesendet wird, so steuert die Steuereinheit (12) die Kommunikations-Schaltmittel (K1,K2,..,KN) derart, dass der bestimmte Sekundär-Busanschluss (S1,S2,..,SN) an die Master-Einheit (11) angeschaltet wird und die übrigen Sekundär-Busanschlüsse (S1,S2,..,S_{N}) von der Master-Einheit (11) getrennt werden.

6. Verfahren nach Anspruch 5, wobei in einem ersten Anfrageversuch die Anfrage (X) auf einen ersten Sekundär-Busanschluss (S1) bzw. auf das an ihm angeschlossene erste Endgerät (F1) gerichtet wird und die Anfrage (X) eine Adresse enthält mit dem Wert entsprechend einer Wertigkeit, welche der Sekundär-Busanschluss (S1) bzw. welche das Endgerät (F1) durch seine Position an dem Datenbuskoppler (1) hat, wobei auf eine von dem ersten Endgerät (F1) ausgesendete Antwort (Y) gewartet wird und für den Fall, dass innerhalb einer vorgegebenen Zeitspanne keine Antwort (Y) von der Master-Einheit (11) empfangen wird, wird ein zweiter Anfrageversuch mit einer Adresse mit dem Wert entsprechend eines Default-Wertes durchgeführt, und für den Fall, dass innerhalb der vorgegebenen Zeitspanne eine Antwort (Y) von der Master-Einheit (11) empfangen wird, wird die in der letzten Anfrage (X) enthaltende Adresse als gültig für diesen Sekundär-Busanschluss (S1) bzw. den daran angeschlossenen Teilnehmer (F1) übernommen.

7. Verfahren nach einem der Anspruch 6, wobei für den Fall, dass für alle bisher durchgeführten Anfragen (X) keine Antwort (Y) erhalten werden konnte, wird über die Steuereinheit (12) ein Diagnosebefehl generiert und nach der Art des Absetzens der Anfrage (X) abgesetzt.

8. Verfahren nach einem der Ansprüche 5 bis 7, wobei nach der Übertragung der Anfrage (X) der Master-Einheit (11) und nach Ablauf einer Wartezeit mittels der Steuereinheit (12) die Kommunikations-Schaltmittel (K1,K2,..,K_{N}) derart gesteuert werden, dass die übrigen Sekundär-Busanschlüsse (S1,S2,..,S_{N}) wieder an die Master-Einheit (11) angeschaltet werden.

9. Verfahren nach einem der Ansprüche 6 bis 8, wobei für den Fall, dass innerhalb der vorgegebenen Zeitspanne eine Antwort (Y) von der Master-Einheit (11) empfangen wird, wird mittels der Steuereinheit (12) eine Anfrage (X) für einen weiteren Sekundärbus-Anschluss (S1) bzw. für ein weiteres daran angeschlossenes Endgerät (F1) generiert.

## Claims

1. Data bus coupler (1) having a primary bus connection (P) for a primary bus (2) and a plurality of secondary bus connections (S1, S2, .., *S_{N}*) for the connection of each one terminal (F1, F2, .., *F_{N}*) comprising
- a slave unit (10) which is connected to the primary bus connection (P), and
- a master unit (11) which can be connected to the secondary bus connections (S1, S2, .., *S_{N}*) and which is embodied to send telegrams to the secondary bus connections (S1, S2, .., *S_{N}*) or receive the same therefrom,
**characterised by**
- a control unit (12),
- a communication switching means (K1, K2, .., *K_{N}*) per secondary bus connection (S1, S2, .., *S_{N}*) which connects or separates the respective secondary bus connection (S1, S2, .., *S_{N}*) to or from the master unit (11),
wherein the control unit (12) is embodied to control the communication switching means (K1, K2, .., *K_{N}*) in respect of the connection or separation,
wherein the control unit (12)
- has a command output (12a) and is embodied to inform a determinable secondary bus connection (S1, S2, .., *S_{N}*) of the planned query (X) of the secondary unit (12) by way of the command output (12a) of the master unit (11), wherein the control unit (12) also
- has a telegram evaluation input (12b) which is connected to the master unit (11) and the control unit (12) is embodied to read the telegrams sent by the master unit (11) and to examine the telegrams for the planned query (X), furthermore the control unit (12) is embodied to control the communication switching means (K1, K2, .., *K_{N}*) at the point in time of sending the query (X) by the master unit (11),in such a case the control unit (12) is embodied such that the communication switching means (K1, K2, .., *K_{N}*) associated with the queried secondary bus connection (S1, S2, .., *S_{N}*) is controlled such that it connects the associated secondary bus connection (S1, S2, .., *S_{N}*) determined in the query (X) to the master unit (11) and controls the remaining communication switching means (K1, K2, .., *K_{N}*) such that the master unit (11) is separated from the secondary bus connections (S1, S2, .., *S_{N}*) not determined in the query (X) .

2. Data bus coupler (1) according to claim 1, having a supply switching means (V1, V2, .., *V_{N}*) per secondary bus connection (S1, S2, .., *S_{N}*), wherein the control unit (12) is also embodied to control the supply switching means (V1, V2, .., *V_{N}*) such that a supply voltage can be separately connected to the secondary bus connections (S1, S2, .., *S_{N}*).

3. Data bus coupler (1) according to claim 2, having a diagnostics unit (13), which is connected to the control unit (12) and embodied to identify a connection of a terminal (F1, F2, .., *F_{N}*) to a secondary bus connection (S1, S2, .., *S_{N}*), wherein the control unit (12) is embodied to control all supply switching means (V1, V2, .., *V_{N}*), prior to a possible identification, such that the supply voltage is connected to the secondary bus connections (S1, S2, .., *S_{N}*).

4. Data bus coupler (1) according to claim 3, wherein the diagnostics unit (13) is also embodied to identify a separation of a terminal (F1, F2, .., *F_{N}*) from a secondary bus connection (S1, S2, .., *S_{N}*), wherein the control unit (12) is embodied to control the associated communication switching means (K1, K2, .., *K_{N}*) almost simultaneously such that the master unit (11) is separated from the associated secondary bus connections (S1, S2, .., *S_{N}*).

5. Method for determining addresses of terminals (F1, F2, .., *F_{N}*), which are connected to a databus coupler (1) according to one of claims 1 to 4 by way of secondary bus connections (S1, S2, .., *S_{N}*), wherein based on a terminal (F1) connected to a secondary bus connection (S1) in the control unit (12), a query (X) is generated for this terminal (F1), this query (X) is transferred to the master unit (11) and is placed in a queue (11a), at the same time the telegram traffic transmitted by the master unit (11) is monitored by the control unit (12) and the sent telegrams are checked for the appearance of the query (X), wherein the query (X) is directed at a determined secondary bus connection (S1, S2, .., *S_{N}*) and moreover the query (X) contains a first suggested address of the terminal (F1) connected to the determined secondary bus connection (S1, S2, .., *S_{N}*), the monitoring causes the query (X) to be transmitted by the master unit (11) so that the control unit (12) controls the communication switching means (K1, K2,.., *K_{N}*) such that the determined secondary bus connection (S1, S2, .., *S_{N}*) is connected to the master unit (11) and the remaining secondary bus connections (S1, S2 ,.., *S_{N}*) are separated from the master unit (11).

6. Method according to claim 5, wherein in a first query attempt the query (X) is directed at a first secondary bus connection (S1) or at the first terminal (F1) connected thereto and the query (X) contains an address with the value according to an importance, which the secondary bus connection (S1) or which the terminal (F1) has on account of its position on the data bus coupler (1), wherein a response (Y) sent by the first terminal (F1) is awaited and in the event that no response (Y) is received by the master unit (11) within a predetermined time span, a second query attempt with an address with the value according to a default value is performed, and in the event that a response (Y) is received by the master unit (11) within the predetermined time span, the address contained in the last query (X) is assumed to be valid for this secondary bus connection (S1) or the subscriber (F1) connected thereto.

7. Method according to one of claim 6, wherein in the event that no response (Y) could be obtained for all previously implemented queries (X), a diagnostics command is generated by way of the control unit (12) and is sent in the manner of sending the query (X).

8. Method according to one of claims 5 to 7, wherein after transmitting the query (X) to the master unit (11) and after a waiting time has elapsed, the communication switching means (K1, K2, .., *K_{N}*) is controlled by means of the control unit (12) such that the remaining secondary bus connections (S1, S2, .., *S_{N}*) are connected again to the master unit (11).

9. Method according to one of claims 6 to 8, wherein in the event that a response (Y) is received by the master unit (11) within the predetermined time interval, a query (X) for a further secondary bus connection (S1) or for a further terminal (F1) connected thereto is generated by means of the control unit (12).

## Revendications

1. Coupleur (1) de bus de données, comprenant un accès (P) de bus primaire pour un bus (2) primaire et une pluralité d'accès (S1, S2, .., S_{N}) de bus secondaires pour le raccordement respectivement d'un appareil (F1, F2, .., F_{N}) terminal, comprenant
- une unité (10) esclave, qui est en liaison avec l'accès (P) de bus primaire et
- une unité (11) maître, qui peut être branchée sur les accès (S1, S2, .., S_{N}) de bus secondaires et qui est conformée pour émettre des télégrammes sur les accès (S1, S2, .., S_{N}) de bus secondaires ou pour en recevoir de ceux-ci,
**caractérisé par**
- une unité (12) de commande,
- un moyen (K1, K2, .., K_{N}) de commutation de communication par accès (S1, S2, .., S_{N}) de bus secondaire, qui relie l'accès (S1, S2, .., S_{N}) de bus secondaire respectif à l'unité (11) maître ou qui le sépare de l'unité (11) maître,
l'unité (12) de commande étant conformée pour commander les moyens (K1, K2, .., K_{N}) de commutation de communication en ce qui concerne la liaison ou la séparation,
dans lequel l'unité (12) de commande
- a une sortie (12a) d'instruction et est conformée pour, par l'intermédiaire de la sortie (12a) d'instruction, faire part, à l'unité (11) maître, d'une interrogation (X) prévue de l'unité (12) de commande sur un accès (S1, S2, .., S_{N}) de bus secondaire pouvant être déterminé, l'unité (12) de commande ayant en outre
- une entrée (12b) d'exploitation de télégramme, qui est reliée à l'unité (11) maître et l'unité (12) de commande est conformée pour lire les télégrammes émis par l'unité (11) maître et pour étudier les télégrammes en ce qui concerne l'interrogation (X) prévue, l'unité (12) de commande étant conformée pour commander, à l'instant de l'émission de l'interrogation (X) par l'unité (11) maître, les moyens (K1, K2, .., K_{N}) de commutation de communication appartenant aux accès (S1, S2, .., S_{N}) de bus secondaires interrogés de manière à brancher l'accès (S1, S2, .., S_{N}) de bus secondaire associé défini dans l'interrogation (X) sur l'unité (11) maître et à commander les autres moyens (K1, K2, .., K_{N}) de commutation de communication de manière à séparer l'unité (11) maître des accès (S1, S2, .., S_{N}) de bus secondaires non définis dans l'interrogation (X).

2. Coupleur (1) de bus de données suivant la revendication 1, comprenant un moyen (V1, V2, .., V_{N}) de commutation d'alimentation par accès (S1, S2, .., S_{N}) de bus secondaire, l'unité (12) de commande étant conformée en outre pour commander les moyens (V1, V2, .., V_{N}) de commutation d'alimentation de manière à appliquer individuellement une tension d'alimentation aux accès (S1, S2, .., S_{N}) de bus secondaires.

3. Coupleur (1) de bus de données suivant la revendication 2, comprenant une unité (13) de diagnostic, qui est en liaison avec l'unité (12) de commande et qui est conformée pour détecter un raccordement d'un appareil (F1, F2, .., F_{N}) terminal à un accès (S1, S2, .., S_{N}) de bus secondaire, l'unité (11) de commande étant conformée pour commander, par une détection éventuelle, tous les moyens (V1, V2, .., V_{N}) de commutation d'alimentation de manière à appliquer la tension d'alimentation aux accès (S1, S2, .., S_{N}) de bus secondaires.

4. Coupleur (1) de bus de données suivant la revendication 3, dans lequel l'unité (13) de diagnostic est conformée en outre pour détecter une séparation d'un appareil (F1, F2, .., F_{N}) terminal d'un accès (S1, S2, .., S_{N}) de bus secondaire, l'unité (12) de commande étant conformée pour commander, quasiment en même temps, les moyens (K1, K2, .., K_{N}) de commutation de communication associés de manière à séparer l'unité (11) maître des accès (S1, S2, .., S_{N}) de bus secondaires associés.

5. Procédé de détermination d'adresses d'appareils (F1, F2, .., F_{N}) terminaux, qui sont raccordés par des accès (S1, S2, .., S_{N}) de bus secondaires à un coupleur (1) de bus de données suivant l'une des revendications 1 à 4, dans lequel, à partir d'un appareil (F1) terminal raccordé à un accès (S1) de bus secondaire, on produit, dans l'unité (12) de commande, une interrogation (X) pour cet appareil (F1) terminal, on transmet cette interrogation (X) à l'unité (11) maître et on la range dans une file (11a) d'attente, en même temps, on contrôle, par l'unité (12) de commande, la circulation de télégrammes envoyés par l'unité (11) maître et on contrôle les télégrammes émis en ce qui concerne l'apparition de l'interrogation (X), l'interrogation (X) étant dirigée sur un accès (S1, S2, .., S_{N}) de bus secondaire déterminé et, en outre, l'interrogation (X) contenant une première adresse présumée de l'appareil (F1) terminal raccordé à l'accès (S1, S2, .., S_{N}) de bus secondaire déterminé, si le contrôle montre que l'interrogation (X) a été émise par l'unité (11) maître, l'unité (12) de commande commande les moyens (K1, K2, .., K_{N}) de commutation de communication de manière à brancher l'accès (S1, S2, .., S_{N}) de bus secondaire déterminé sur l'unité (11) maître et à séparer les autres accès (S1, S2, .., S_{N}) de bus secondaires de l'unité (11) maître.

6. Procédé suivant la revendication 5, dans lequel, dans un premier essai d'interrogation, on dirige l'interrogation (X) sur un premier accès (S1) de bus secondaire ou sur le premier appareil (F1) terminal, qui lui est raccordé, et l'interrogation (X) contient une adresse ayant l'estimation correspondant à une valeur que l'accès (S1) de bus secondaire ou que l'appareil (F1) terminal a par sa position sur le coupleur (1) de bus de données, dans lequel on attend une réponse (Y) émise par le premier appareil (F1) terminal et, dans le cas où, dans un laps de temps donné à l'avance, une réponse (Y) n'est pas reçue par l'unité (11) maître, on effectue un deuxième essai d'interrogation avec une adresse ayant l'évaluation correspondant à une évaluation de défaut et, dans le cas où, dans le laps de temps donné à l'avance, on reçoit une réponse (Y) de l'unité (11) maître, on prend l'adresse contenue dans la dernière interrogation (X) comme valable pour cet accès (S1) de bus secondaire ou le participant (F1) qui y est raccordé.

7. Procédé suivant la revendication 6, dans lequel, dans le cas où on n'a pas pu recevoir de réponse (Y) pour toutes les interrogations (X) effectuées jusqu'ici, on produit une instruction de diagnostic par l'intermédiaire de l'unité (12) de commande et on l'émet à la manière de l'émission de l'interrogation (X).

8. Procédé suivant l'une des revendications 5 à 7, dans lequel, après la transmission de l'interrogation (X) à l'unité (11) maître et après l'expiration d'un temps d'attente, on commande, au moyen de l'unité (12) de commande, les moyens (K1, K2, .., K_{N}) de commutation de communication de manière à brancher les autres accès (S1, S2, .., S_{N}) de bus secondaires à nouveau sur l'unité (11) maître.

9. Procédé suivant l'une des revendications 6 à 8, dans lequel, dans le cas où, dans le laps de temps donné à l'avance, on reçoit une réponse (Y) de l'unité (11) maître, on produit, au moyen de l'unité (12) de commande, une interrogation (X) pour un autre accès (S1) de bus secondaire ou pour un autre appareil (F1) terminal qui y est raccordé.
